Europäisches Patentamt

European Patent Office

Office européen des brevets

(11) Publication number: **0 132 397**
**A2**

## (12) EUROPEAN PATENT APPLICATION

(21) Application number: **84304961.0**

(22) Date of filing: **20.07.84**

(51) Int. Cl.⁴: **A 01 B 13/08**

(30) Priority: **26.07.83 GB 8320133**

(43) Date of publication of application: **30.01.85**
Bulletin 85/5

(84) Designated Contracting States: **DE FR GB NL**

(71) Applicant: **Howard Machinery P.L.C., Mendham Lane, Harleston Norfolk IP20 9DP (GB)**
Applicant: **IMPERIAL CHEMICAL INDUSTRIES PLC, Imperial Chemical House Millbank, London SW1P 3JF (GB)**

(72) Inventor: **Linger, Barry Anthony, Woodlands, Wimborne Dorset DH21 6LN (GB)**

(74) Representative: **Cowan, David Robert et al, WALFORD AND HARDMAN BROWN Trinity House Hales Street, Coventry CV1 1NP West Midlands (GB)**

(54) Soil working implement.

(57) A soil working implement is of the kind having a support frame 13 on which at least one soil working tool 10 is mounted, the tool being preferably of the kind having a tool portion 34 passing edgewise through the ground at an angle to the vertical.

The tool portion 34 has a soil-engaging surface 51 which is inclined at an acute angle to the direction of travel A so that, with the tool 10 offset to one side of the line of action X of the frame, forces tending to generate a turning moment in the horizontal plane are counteracted by engagement of the soil by the inclined soil-engaging surface 51.

Additionally or alternatively the support frame 13 may be adjusted to angle the tool 10 relative to the direction of travel.

ACTORUM AG

## SOIL WORKING IMPLEMENT

This invention relates to soil working implements and in particular to soil working implements arranged to be drawn through the ground by tractors.

Tractor-drawn soil working implements impose a tractive effort on the tractor which needs to be directed in relation to the tractor at a position such that the resultant tractive effort lies on or close to the longitudinal central axis of the tractor. For this purpose the implement is usually mounted on or close to the longitudinal axis of the tractor or, when several implements are employed, the resultant tractive force necessary to draw the implements through the ground is arranged to lie on or close to a line coincident with the longitudinal central axis of the tractor. However with some soil working implements it is desirable to mount the implements offset from the longitudinal central axis and this would normally give rise to the tractive force necessary to draw the implement through the ground being substantially displaced from said longitudinal axis. As a result the tractor drawing the implement through the ground would be subject to a turning movement in a horizontal plane tending to cause the tractor to be diverted from a rectilinear path. This action is generally termed "crabbing" and is an undesirable characteristic of a tractor/implement combination.

An object of the invention is to provide a soil working implement in which any tendency of the implement to generate a crabbing action can be counteracted.

According to one aspect of the invention a soil working implement comprises support means, at least one soil-working tool mounted on the support means, and a soil-engaging member on the soil working tool and having a soil-engaging surface extending generally in the fore and aft direction with respect to the direction of travel of the implement over the ground, the surface of the soil engaging member being inclined at an acute angle to said direction of travel in a direction such that operating forces on the tool tending to generate a turning moment in the generally horizontal plane of the implement are counteracted by engagement of the soil by said inclined soil-engaging surface.

Preferably the soil-engaging surface is inclined at an acute angle in the range 3-12$^{\circ}$ to the direction of travel.

Conveniently the soil working tool includes a blade lying in a plane inclined to the vertical and extending in the fore and aft direction for edgewise movement through the ground, the soil-engaging member being located at the lower end of the soil working tool and constituting a foot member, the soil-engaging surface being at a lateral side of the foot member to which the inclined blade is directed. An upper side surface of the blade constitutes a soil lifting surface of the tool and, due to the inclined orientation of the blade relative to the vertical, the tool generates a lateral force. The foot member may have an upright soil engaging side surface.

Preferably the support means comprises a frame having a leading end attachable through a three point linkage to a tractor vehicle, the soil-working tool being mounted on the frame offset from the longitudinal centre line of the three point linkage and the tractor vehicle and the frame includes a transverse beam and adjustment means whereby the position of the transverse beam relative to the direction of travel is adjustable between positions in which the beam is generally at a right angle to said direction of travel and a position in which said beam lies at an acute angle to said right angle position.

The frame is conveniently pivotally mounted and the adjustment means enables the desired orientation of the frame, and hence that of the soil working tool, to be selected.

According to another aspect of the invention a soil working implement comprises a support frame arranged to be mounted on the three point linkage of a tractor vehicle, the frame including a transverse beam and adjustment means for repositioning the transverse beam relative to the three point linkage, the frame supporting at least one soil working tool in a position offset laterally from a longitudinal centre line of the three point linkage, the adjustment means being arranged for adjustment of the transverse beam between positions in which the beam is generally at a right angle to the direction of travel of the implement and a position in which the beam lies at an acute angle to said right angle position.

Conveniently the soil working tool includes a blade lying in a plane inclined to the vertical and extending generally in the fore and aft direction with respect to the direction of travel for edgewise movement through the ground, adjustment of the transverse beam to said acute angle position inclining the blade at an acute angle to the direction of travel.

The adjustment means may be associated with one of the lower links of the three point linkage and provides for the spacing between the lower link and the frame to be adjusted about the other lower link to thereby adjust the transverse beam relative to the direction of travel.

The soil-engaging surface is inclined at an angle preferably approximately $5^{o} - 10^{o}$ to the direction of travel. In the case in which the implement carries one soil working tool offset laterally from the line of action at which tractive force is applied to the implement, which line is generally the centre line of a tractor, the inclination of the soil-engaging surface may be greater than if two soil working tools are employed. Where more than two soil working tools are employed it may generally be possible to arrange the tools to be so positioned relative to the line of action of the tractive force that the lateral forces generated by the tools are balanced and no inclination of the soil-engaging surface is required.

The invention is particularly applicable to soil working implements such as slant leg soil looseners and conventional ploughs which, due to the nature of their action, sometimes need to be positioned to one side of the central longitudinal axis of a tractor by which the implement is drawn over the ground. Such an arrangement is often necessary when relatively few soil working tools are mounted on the implement.

The inclined soil-engaging surface is preferably an upright surface situated at a lower end of the tool located below the ground surface during operation. The soil-engaging surface may be a replaceable plate located at the selected inclination by a wedge member of a wedge angle necessary to give the selected inclination.

The facility for angular adjustment of the frame and the provision of an inclined soil-engaging surface may both be provided on the implement so that the tendency of the tool or tools to generate a turning moment on the towing vehicle is counteracted in part by angular adjustment of the frame and in part by the inclined soil-engaging surface.

The necessary degree of angular adjustment of the soil-engaging surface relative to the fore and aft direction and/or the inclination of the inclined soil-engaging surface depends on various factors such as the spacing of the tool relative to the longitudinal central axis of the main frame, the nature of the soil, and the nature of the soil working tool. It is desirable to provide means whereby the user is able to make an adjustment to the implement according to, for example, the tractive force or draught load on the implement. In the latter case the adjustment means may include means for effecting an angular adjustment of the soil engaging surface according to the tractive force.

Further features of the invention will appear from the following description of embodiments of the invention given by way of example only and with reference to the drawings in which:-

Fig. 1 is a plan view of one embodiment of the invention,

Fig. 2 is a plan view of part of the embodiment of Fig. 1, and

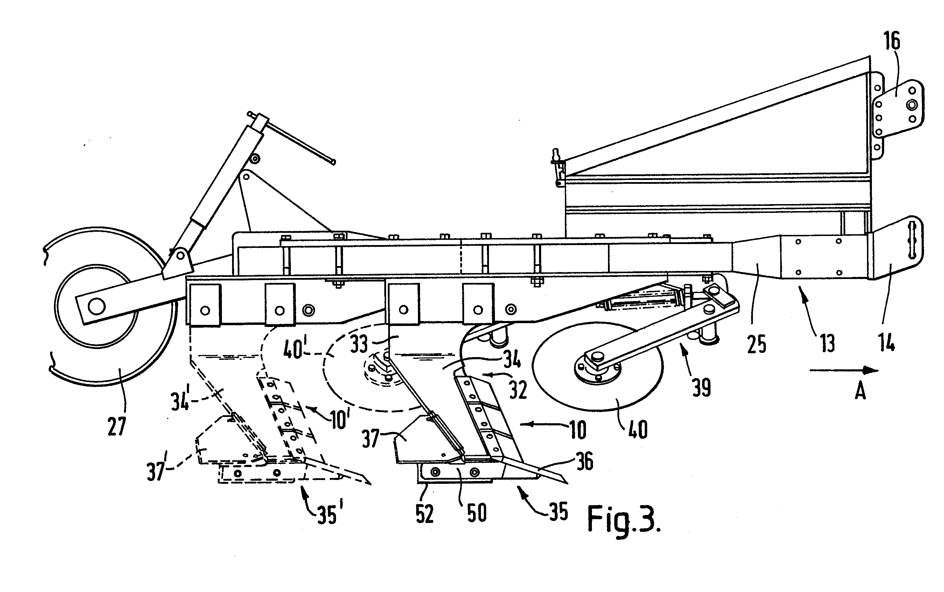

Fig. 3 is a side elevation of the embodiment of Figs. 1 and 2.

Referring to the drawings there is shown in each embodiment a soil working implement incorporating a soil loosening tool 10 (illustrated in full lines) mounted in a position offset from the longitudinal central axis X of the implement frame 13 and of a tractor (not shown) for drawing the tool through the ground.

The implement includes a frame 13 which has brackets for mounting the implement on the standard three point linkage (not shown) of the tractor. Laterally spaced brackets 12 and 14 are secured to a transversely extending beam 15 of the frame 13 for attachment to the lower links of the tractor three point linkage. A central upper bracket 16 is secured to an upwardly-extending frame member 17 for attachment to the top link of the three point linkage.

The frame 13 includes a longitudinal beam 25 and a beam 28 which is inclined to the direction of travel and is rigidly secured to the beam 15 and the frame member 17.

The rear end of the inclined frame member 28 carries an adjustable ground wheel 27 whereby the implement is supported at the selected height relative to the ground surface.

A mounting 29 for the soil loosening tool 10 is located towards the forward end of the beam 28 and it will be seen that the tool 10 is offset from the longitudinal centre line X of the tractor and its associated three point linkage. If desired a further soil loosening tool 10' can be located on the beam 28 spaced rearwards from the tool 10 a distance to enable the areas worked by the tools to overlap. If two such tools are employed it will be seen that both tools 10 and 10' are offset from the line of action X of the tractive effort of the tractor 12. The right hand tool 10 operates to loosen the soil behind and to the right of the right hand wheels of the tractor.

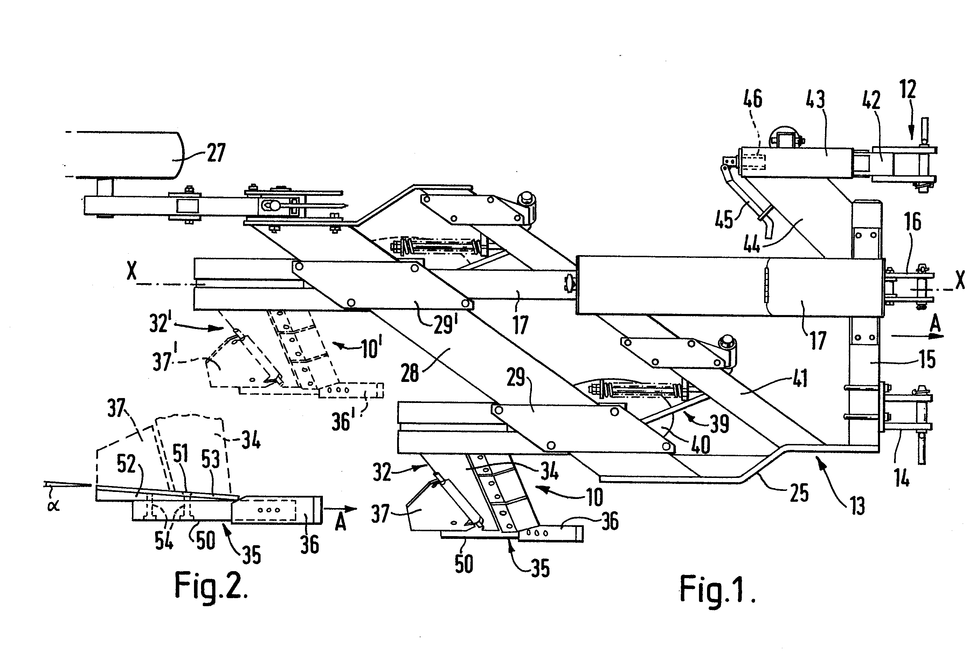

The offset positioning of the tool or tools 10 and 10' imposes an out of balance force on the towing vehicle. The tool 10 includes a blade 32, having an upright portion 33 secured to the mounting 29 and a vertically inclined (at about 45°) portion 34 at the lower end of which is mounted a foot member 35. The blade 32 is arranged to pass edgewise through the soil so that over the inclined portion 34 the soil above said portion is lifted and caused to crack and become loosened. The foot member 35 has an upwardly-inclined leading edge 36 to penetrate the soil during entry of the tool into the ground and to maintain the tool at the selected working depth during operation. The foot member also has lateral vertical side surfaces 50 and 51 (Fig. 2) to impart lateral stability to the tool during operation. In the illustrated tool an adjustable plate 37 is provided at the rear edge of the inclined blade portion 34, the plate 37 being pivotable to adjust the extent of the soil lifting action of the blade.

In advance of the blade 32 is located a disc assembly 39 including a disc 40 inclined to the vertical for cutting a slot in the ground surface in advance of the blade portion 34. The assembly 39 is carried on an inclined beam 41.

As shown the blade 32 is located so that its laterally facing side surfaces of portions 33 and 34 and one surface 50 of the side surfaces of the foot 35 are aligned with the direction of travel A. The other 51 (Fig. 2) of the side surfaces of the foot 35 is arranged to be at a small angle $\alpha$ to the direction of travel. The angle $\alpha$ may be in the range $3^{\circ}$ to $12^{\circ}$ preferably $5^{\circ}$ to $10^{\circ}$. In an arrangement in which only one tool 10 is employed the angle $\alpha$ may be larger than if two tools 10 and 10' are employed, as previously described. To achieve the inclined configuration of the side surface 51 a wedge-shaped spacing element 52 is interposed between a replaceable wearing element 53 defining said surface 51 and the body of the foot 35, the spacing element 52 and the wearing element 53 being secured by bolts 54.

The direction of inclination of the surface 51 is as shown in Fig. 2 and the inclined surface 51 is arranged to counteract the unequal forces on the towing vehicle which would otherwise be generated by the offset position of the tool or tools 10 and 10' and which would tend to cause the towing vehicle to have applied to it a turning moment in the clockwise direction, as seen in Fig. 1, about a generally vertical axis.

If required the wedge-shaped spacing element 52 can be replaced by a further element of a different included angle to that shown according to the requirements of the implement.    As an alternative to the use of a spacing element 52 the wearing element 53 may be of wedge-shape and the spacing element omitted.

The illustrated arrangement also provides the facility for the implement frame to be adjusted so that the laterally-facing side surfaces of the blade 32 lie at small inclinations to the direction of travel.    This is achieved by providing adjustment means associated with the bracket 12 by which the frame is attached to the tractor three point linkage. By this means the frame is angled relative to the other bracket 14.

Since the bracket 14 which lies directly in advance of the tool 10, i.e. the right hand bracket, carries the greater proportion of the tractive force it is preferable to provide the adjustment means on the other bracket 12.

The bracket 12 is carried on a generally longitudinal beam 42 telescopically adjustable relative to a tubular member 43 attached to the transverse beam 15 by a rigid support arm 44.    Adjustment is achieved by a rotatable handle 45 carried on the member 43 and in screw-threaded engagement with an adjustment member 46 secured to the beam 42.    Rotation of the handle 45 causes relative telescopic movement between the beam 42 and the tubular member 43 whereby the transverse beam 15 is moved backwards and forwards at its end adjacent the bracket 12 about the bracket 14.    This causes the beam 15 to lie at an acute angle relative to a direction at a right angle to the direction of travel A.

The adjustment means may alternatively be of any other convenient form and may consist simply of location positions for the attachment of the corresponding lower link to the bracket 12 at different spacings from the beam 15.

When the frame position is to be adjusted the frame is pivoted about the joint at the unadjusted side of the three point linkage, such joint allowing movement of the frame about the vertical axis of the joint.

The adjustment means allows angular adjustment of the frame in the range $0^{\circ}$, i.e. with the beam at a right angle to the direction of travel A (as shown), up to $5^{\circ}$ i.e. with the rear of the frame member 25 offset to the left, as seen, to the direction of travel A so that the frame member 15 is inclined at up to $5^{\circ}$ to a direction at a right angle to the direction of travel A.

It will be appreciated that the adjustment means, when used in association with the inclined foot surface 51, provides means for effecting a simple adjustment in use of the implement to correct any tendency for the towing vehicle to crab. However the adjustment means of the frame can be employed independently of the use of the inclined foot surface 51, if required.

It will be appreciated that other adjustment means can be used for effecting relative movement between the tool and the direction of travel. For example the tool may pivot about an upright axis relative to a fixed frame on which it is mounted. Alternatively relative movement between the beam 15 and the bracket 12 may be achieved by means of a hydraulic cylinder interconnecting the beam 42 and the member 43.

- 11 -

Since the amount of lateral thrust arising from the offset mounting of the soil working tool is a function of the tractive effort for drawing the tool through the ground, means may be provided for automatically adjusting the tool position in accordance with tractive effort. One simple means for achieving this is to interpose a resilient member, for example a steel spring, between the beam 15 and the frame member 25 so that upon an increase in tractive effort the resilient member is extended causing the frame end of the beam 15 adjacent the bracket 14 to be moved rearwards relative to the opposite end of the beam 15. On a reduction in tractive effort the resilient member contracts.

In the arrangement in which a hydraulically-operated ram interconnects the beam 42 and the member 43 a similar automatic adjustment of the tool position can be achieved by providing a valving arrangement on the ram set to operate at a predetermined value to extend and contract the ram.

When positioned as shown the tool 10 effects soil loosening over a region to the rear of the path of the right-hand wheels of the tractor and it will be seen that the tractor/implement combination can carry out a series of soil working operations without the tractor having to pass over a worked area of ground.

Although there is described and shown a soil working implement of the kind having a vertically inclined blade for soil loosening, it will be appreciated that the invention finds application with other forms of soil working tools which impose out of balance forces on tractors when drawn in a position offset from the longitudinal centre line of the tractor.

CLAIMS

1.  A soil working implement comprises support means (14,15,16,25, 28), at least one soil working tool (10) mounted on the support means, and a soil-engaging member (53) on the soil working tool and having a soil-engaging surface (51) extending generally in the fore and aft direction with respect to the direction of travel (A) of the implement over the ground, characterised in that the surface (51) of the soil-engaging member (53) is inclined at an acute angle ( $\alpha$ ) to said direction of travel (A) in a direction such that operating forces on the tool (10) tending to generate a turning moment in the generally horizontal plane of the implement are counteracted by engagement of the soil by said inclined soil-engaging surface (51).

2.  An implement according to Claim 1 characterised in that the soil-engaging surface (51) is inclined at an acute angle ( $\alpha$ ) in the range 3-12° to the direction of travel (A).

3.  An implement according to Claim 1 or 2 characterised in that the soil working tool (10) includes a blade (34) lying in a plane inclined to the vertical and extending in the fore and aft direction for edgewise movement through the ground, the soil-engaging member (53) being located at the lower end of the soil working tool and constituting a portion of a foot member (35), the soil-engaging surface (51) being at a lateral side of the foot member (35) to which the inclined blade (34) is directed.

4.  An implement according to Claim 3 characterised in that the soil-engaging surface (51) is upright.

5. An implement according to any one of Claims 1-4 characterised in that the support means comprises a frame (15,17,25,28) having a leading end attachable through attachment means (12,14,16) to a three point linkage to a tractor vehicle, the soil working tool (34) being mounted on the frame offset from the longitudinal centre line (X-X) of the three point linkage and the tractor vehicle.

6. An implement according to Claim 5 characterised in that the frame includes a transverse beam (15) and adjustment means whereby the position of the transverse beam relative to the direction of travel (A) is adjustable between positions in which the beam is generally at a right angle to said direction of travel and a position in which said beam lies at an acute angle to said right angle position.

7. An implement according to Claim 6 characterised in that said acute angle lies in the range 0-5°.

8. A soil working implement comprises a support frame (14,15,16,17,25,28) arranged to be mounted on the three point linkage of a tractor vehicle, the frame supporting at least one soil working tool (10) in a position offset laterally from a longitudinal centre line (X-X) of the three point linkage, the frame including a transverse beam, (15), characterised by adjustment means (42-46) for repositioning the transverse beam relative to the three point linkage, the adjustment means being arranged for adjustment of the transverse beam between positions in which the beam is generally at a right angle to the direction of travel of the implement and a position in which the beam lies at an acute angle to said right angle position.

9. A soil working implement according to Claim 8 characterised in that the soil working tool (10) includes a blade (34) lying in a plane inclined to the vertical and extending generally in the fore and aft direction with respect to the direction of travel for edgewise movement through the ground, adjustment of the transverse beam to said acute angle position inclining the blade at an acute angle to the direction of travel.

10. A soil working implement according to Claim 8 or 9 characterised in that the adjustment means (42-46) is associated through attachment means (12) with one of the lower links of the three point linkage and provides for the spacing between the lower link and the frame to be adjusted about the other lower link to thereby adjust the transverse beam relative to the direction of travel.

11. An implement according to Claim 10 characterised in that the adjustment means (42-46) includes longitudinally-extending telescopic members.

Fig.2.

Fig.1.

0132397

16

27

34'

37'

35'

40'

33

10'

34

32

37

52

50

35

36

10

40

39

25

13

14

A

Fig.3.